# EUROPÄISCHE PATENTSCHRIFT

(11) **EP 1 592 554 B1**
(45) Veröffentlichungstag und Bekanntmachung des Hinweises auf die Patenterteilung: **02.01.2008**
(21) Anmeldenummer: 04707505.6
(22) Anmeldetag: 03.02.2004
(51) Int. Cl.: B32B 27/08, B32B 27/14, B32B 27/32, B60K 37/00

(54) **Schaumstoffkörper, insbesondere ausstattungsteil für den innenraum eines kraftfahrzeugs, und verfahren zu seiner herstellung**
Foam article, especially trimming element for the interior of a motor vehicle, and method for producing the same
Produit alveolaire, notamment element d'equipement pour l'habitacle d'un vehicule, et procede de fabrication associe

(30) Priorität: 04.02.2003 DE 10304513
(43) Veröffentlichungstag der Anmeldung: 09.11.2005
(73) Patentinhaber: Johnson Controls Interiors GmbH & Co. KG, 42285 Wuppertal (DE)
(72) Erfinder: RODEWYK, Manfred, 42349 Wuppertal (DE); WEISS, Didier, F-57880 Guerting (FR)
(74) Vertreter: Hemmelmann, Klaus
(86) Internationale Anmeldenummer: PCT/EP2004/000942
(87) Internationale Veröffentlichungsnummer: WO 2004/069514

(56) Entgegenhaltungen:
- EP-A- 0 623 491
- EP-A- 1 008 492
- EP-A- 1 199 156
- WO-A-96/14223
- WO-A-99/56949
- DE-A- 19 700 628
- US-A- 5 945 200

## Beschreibung

Die Erfindung betrifft einen Schaumstofformkörper mit einem Grundkörper aus geschäumten, agglomerierten Kunststoffpartikeln, welcher zumindest bereichweise mit einer Kunststofffolie umgeben ist, sowie ein Verfahren zu dessen Herstellung.

### Stand der Technik

In der Patentanmeldung EP 0591 553 B1 wird ein gattungsgemäßes Verfahren zur Herstellung eines einseitig mit einer Haut versehenen Schaumstoffkörpers mittels eines Formwerkzeugs offenbart, das aus zwei voneinander trennbaren Formhälften besteht.

Nach dem Öffnen des Werkzeugs wird eine gegebenenfalls vorgeformte, gasundurchlässige Haut aus Kunststoff, beispielsweise aus Polyproplylen, in eine der Formhälften eingelegt. Die Haut weist eine Dicke von mindestens 0,5 mm, üblicherweise jedoch etwa 5 mm auf und kann zur Verbesserung der Haptik rückseitig mit einer Schicht aus extrudiertem Weichschaum versehen sein. Auf die Innenseite der Haut bzw. des Laminats aus Haut und Weichschaum ist in der Regel ferner ein haftungsverbessernder Klebstoff aufbracht.

Nach dem Schließen des Werkzeugs wird die Kavität mit Partikeln aus vorexpandiertem Polypropylen mit einem mittleren Durchmesser von 0,1 bis 10 mm, insbesondere 0,7 bis 5 mm, gefüllt, die durch Zufuhr von Dampf über die andere Formhälfte erwärmt werden. Der Dampf weist eine Temperatur auf, die unterhalb der Schmelztemperatur der Partikel liegt, so dass deren Verschmelzen vermieden wird. Infolge dieses Vorgehens bleibt die Partikelschüttung gasdurchlässig und kann durch den Dampf gleichmäßig vorgewärmt werden. Nachdem die Partikel einem "murashi" unterzogen wurden (unter diesem Begriff versteht der Anmelder gegebenenfalls die Verweilzeit beim Vorwärmen), wird Kondensat aus der Kavität abgeführt. Nachfolgend wird erneut Dampf in das Formwerkzeug eingespeist, dessen Temperatur zumindest der Schmelztemperatur der bereits vorgewärmten Partikel entspricht, wobei die Partikel partiell miteinander verschmelzen. Der so erzeugt Gegenstand kann nach dem Trennen der Formhälften aus dem Formwerkzeug entnommen werden.

Nachteil dieses Verfahrens sind die langen Fertigungszyklen sowie die üblicherweise erforderliche Verwendung von Haftvermittlern. Außerdem bestehen derartige Formkörper aus miteinander stoffschlüssig verbunden Werkstoffkomponenten, die nur bedingt einem Recycling zugeführt werden können.

Aus der Offenlegungsschrift DE 42 37 239 A1 ist ein bevorzugt plattenförmig ausgebildeter Schaumstoffkörper bekannt, zu dessen Herstellung in einem ersten Arbeitsschritt ein Kern aus geschäumten Partikeln gefertigt wird, die durch Mahlen von wiederzuverwertendem Schaumstoff gewonnen werden. Die Kavität eines Formwerkzeugs wird hierzu mit diesen Partikeln gefüllt und mit Dampf und Luft beaufschlagt, wodurch diese agglomerieren.

Anschließend wird die Werkzeugkavität durch Verstellen von Schiebern vergrößert, wobei der Kern durch Positioniereinheiten in einer zentralen Lage gehalten wird. Der Raum zwischen Kern und Werkzeugwandung wird nachfolgend mit frischem granularem Schaumstoffrohmaterial gefüllt. Anschließend wird erneut Dampf in der Werkzeug eingespeist, so dass das frische Material einen den Kern vollumfänglich umschließenden Mantel ausbildet. Der fertige Schaumstoffkörper kann in einem letztem Arbeitsschritt dem Formwerkzeug entnommen werden. Als Werkstoff zur Herstellung des Schaumstoffkörpers kommen insbesondere Polystyrol und Polyolefine (Polyäthylen, Polypropylen) in Betracht.

Derartige Schaumstoffkörper weisen zwar bei niedrigem Gewicht eine für viele Anwendungen ausreichende Festigkeit auf, ihre Oberflächenqualität ist jedoch unzureichend, da sich die Struktur der agglomerierten Schaumpartikel deutlich abzeichnet.

### Aufgabe

Der Erfindung liegt die Aufgabe zugrunde, einen Formkörper anzubieten, der mit geringen Fertigungszeiten herstellbar ist, eine gute Oberflächenqualität aufweist und unbeschränkt wiederaufarbeitbar ist.

### Lösung

Die Aufgabe wird erfindungsgemäß dadurch gelöst, dass die Kunststofffolie aus einem Werkstoffgemisch mit mindestens einer ersten und einer zweiten, gegenüber der ersten höheren Schmelztemperatur besteht, wobei die Kunststoffpartikel bei einer Temperatur oberhalb der ersten und unterhalb der zweiten Schmelztemperatur der Kunststofffolie miteinander agglomerierbar sind.

Durch diese stoffliche Zusammensetzung weist die Kunststofffolie bei den zur Verarbeitung der Kunststoffpartikel erforderlichen Temperaturen durch Überschreiten der ersten Schmelztemperatur bereits eine ausreichende Haftfähigkeit auf, besitzt jedoch durch Unterschreiten der zweiten Schmelztemperatur noch eine so hohe Festigkeit, dass trotz geringer Foliendicke eine gute Tiefziehfähigkeit gegeben ist und die Oberflächenstruktur der agglomerierten Kunststoffpartikel nicht oder nur in nicht störendem Maße durch die Kunststofffolie hindurch sichtbar ist.

Das Werkstoffgemisch kann beispielsweise durch mechanisches Vermengen gesondert hergestellter homogener Kunststoffe gewonnen werden.

Vorzugsweise bestehen sowohl die Kunststoffpartikel und als auch die Kunststofffolie aus teilkristallinen Kunststoffen, wobei die Kristallitschmelztemperaturen (KT1), (KT2), KT3) den genannten Schmelztemperaturen (TS1, TS2, TS3) entsprechen. Die Kristallitstrukturen schmelzen jeweils innerhalb eines engen Temperaturbandes auf, während sich die Eigenschaften der Kunststofffolie außerhalb dieser Temperaturbänder nur moderat ändern. Insofern wirken sich Schwankungen in der Temperaturführung beim Verarbeitungsprozeß weniger stark auf die Produktqualität auf als bei amorphen Kunststoffen.

Mit Vorteil weist das Werkstoffgemisch der Kunststofffolie anteilig eine ähnliche stoffliche Zusammensetzung wie die Kunststoffpartikel auf und kann gemeinsam mit dieser stofflich wiederverwertet werden. Ferner erleichtert diese Ausbildung die Haftung zwischen beiden Komponenten.

Eine sowohl im Hinblick auf das Recycling als auch bezüglich des Einsatzes im Kraftfahrzeug besonders vorteilhafte Materialpaarung umfaßt Kunststoffpartikel aus expandiertem Polypropylen (EPP) und eine Kunststofffolie aus einem Gemisch aus Polyethylen (PE), Polypropylen (PP) und einem thermoplastischen Elastomer auf olefinischer Basis (TPO).

Die Kunststofffolie kann bei unverändert geringer Wanddicke auch mehrlagig ausgebildet sein, wobei mindestens die den Kunststoffpartikeln zugewandte Lage aus dem genannten Werkstoffgemisch gefertigt ist. In diesem Fall kann mit geringem Kostenaufwand eine Schicht der Kunststofffolie zur Verbesserung der optischen Eigenschaften eingefärbt und/oder mit Mattierungsmitteln versehen werden, während die innenliegende Schicht weiterhin eine ausgezeichnete Haftung mit den Kunststoffpartikeln besitzt.

Die Dicke der Kunststofffolie beträgt beispielsweise 100 bis 300 *µ*m, vorzugsweise 150 bis 250 *µ*m, insbesondere etwa 200 *µ*m. Derart dünne Folien erreichen beim Beaufschlagen mit erwärmtem Gas kurzfristig die Verarbeitungtemperatur und erhöhen die Kosten für den Schaumstoffkörper nur geringfügig.

Der Schaumstoffkörper erhält eine besonders ansprechende Anmutung, wenn auf die an sich im Wesentlichen glatte Kunststofffolie beim Verschmelzen mit den Kunststoffpartikeln außenseitig eine Struktur aufgeprägt wird.

Die Vorzüge derartiger Schaumstoffkörper sind besonders augenfällig, wenn dieser flächig ausgebildet ist und sich die Kunststofffolie im Wesentlichen über seine nachfolgend sichtbaren Flächenseiten erstreckt.

Besonders geeignet sind solche Schaumstoffkörper zur Verwendung als Sonnenblende oder eine Türverkleidung in Kraftfahrzeugen.

Ein derartiger Schaumstoffkörper wird erfindungsgemäß dadurch hergestellt, dass die Kunststofffolie in ein mehrteiliges Formwerkzeug eingelegt und das Formwerkzeug anschließend mit den Kunststoffpartikeln und erwärmtem Gas gefüllt wird, wobei die Temperatur des Gases höher als die erste, aber niedriger als die zweite Schmelztemperatur des Werkstoffgemisches der Kunststofffolie ist.

Als Gas kommen vorzugsweise Wasserdampf, insbesondere Naßdampf, Heißluft oder ein Gemisch derselben in Betracht, wobei das Gas gleichfalls zur pneumatischen Befüllung des Formwerkzeugs dienen kann.

Die Kunststofffolie wird beim Einlegen in das Formwerkzeug vorzugsweise randseitig zwischen dessen Formhälften gespannt. Beim pneumatischen Befüllen der Kavität legt sich die Kunststofffolie dann an die Oberfläche des Werkzeugs an. Dieser Vorgang kann gegebenenfalls durch Anlegen eines Unterdrucks auf der Gegenseite unterstützt werden. Erforderlichenfalls ist es auch möglich die Kunststofffolie nach dem Einlegen in das Formwerkzeug und vor dessen Füllen mit den schäumbaren Kunststoffpartikeln durch Einspeisen von erwärmtem Gas vorzudehnen.

Bei einer entsprechenden Strukturierung der Kavität kann die Kunststofffolie beim Einfüllen des Gemisches aus schäumbaren Kunststoffpartikeln und erwärmtem Gas ferner außenseitig geprägt werden, um den optischen Eindruck nochmals zu verbessern.

Das dem Formwerkzeug zugeführte Gas wird nach der vorliegenden Erfindung zumindest teilweise über gaspermeable, nicht von der Kunststofffolie abgedeckte Bereiche der Kavität des Formwerkzeugs abgeführt.

### Figuren

Die Figuren stellen beispielhaft und schematisch Ausbildungen der Erfindung dar. Es zeigen:
- Fig. 1: einen erfindungsgemäßen Schaumstoffkörper sowie eine vergrößerte Schnittdarstellung
- Fig. 2: das h-T Diagramm geeigneter Kunststoffe zur Herstellung der Kunststofffolie bzw. der Kunststoffpartikel
- Fig. 3: die Verfahrensschritte bei der Herstellung des Schaumstoffkörpers nach Anspruch 1

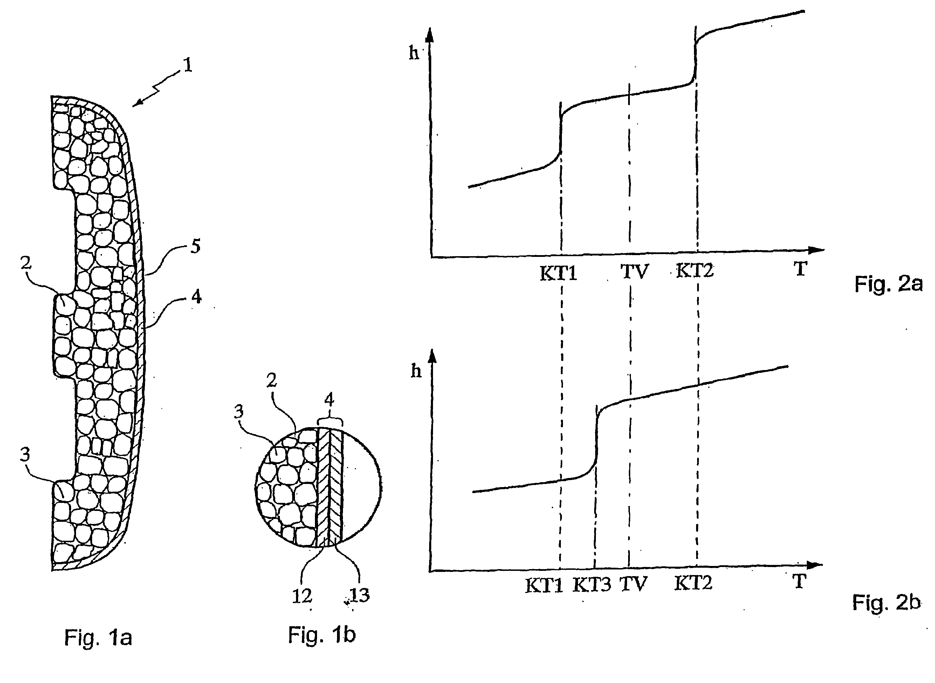

Der in Fig. 1a dargestellte Schaumstoffkörper 1 ist schalenartig ausgeformt und bildet nachfolgend eine Hälfte einer zweiteiligen Sonnenblende für ein Kraftfahrzeug. Er besteht aus einem Grundkörper 2 aus agglomerierten Kunststoffpartikeln 3 aus expandiertem Polypropylen (EPP), die eine annähernd kugelförmige Gestalt mit einem Durchmesser von 3 bis 4 mm aufweisen können.

Eine Flächenseite des Grundkörpers 2 ist mit einer Kunststofffolie 4 mit einer Dicke von etwa 200 µm überzogen, die ohne Zugabe von Hilfsmitteln (Haftvermittler, Klebstoff) stoffschlüssig mit diesem verbunden ist. Die Sichtseite 5 der Kunststofffolie ist mit einer beispielsweise lederartig genarbten Struktur versehen.

Die Kunststofffolie besteht aus einem Gemisch aus Polyethylen (PE), Polypropylen (PP) und einem thermoplastischen Elastomer auf olefinischer Basis (TPO), das aufgrund dieser Werkstoffzusammensetzung zwei Kristallitschmelzpunkt KT1 und KT2 aufweist, wie aus dem h-T Diagramm nach Fig. 2a hervorgeht. Beim Erwärmen dieses Gemisches unter Beaufschlagung mit einem kontinuierlichen Wärmestrom werden zunächst bei einer Temperatur KT1 von etwa 125°C die Kristallitbereiche des PE bzw. TPO aufgeschmolzen. Dieser Vorgang zeigt sich im Diagramm durch eine sprunghafte Enthalpiezunahme bei im Wesentlichen unveränderter Temperatur. Dieses Verhalten ist grundsätzlich allen teilkristallinen Kunststoffen eigen.

Bei weiterer Wärmezufuhr erreicht der Werkstoff bei der Temperatur TS2 von etwa 160°C seinen zweiten Schmelzpunkt, an dem die Kristallstrukturen des PP aufgeschmolzen werden. Auch dieser Vorgang äußert sich in einer Enthalpiezunahme bei nahezu gleichbleibender Temperatur.

Die Kunststofffolie 4 erreicht bereits bei einer Tempertur oberhalb von KT1 eine gute Haftfähigkeit, behält jedoch bis zum Überschreiten von KT2 eine nennenswerte Festigkeit. Diese Eigenschaft ist auch im Hinblick auf die spätere Verwendung des Schaumstoffkörpers im Fahrzeuginnenraum bedeutsam, so dass trotz hoher Temperaturen bei Sonneneinstrahlung eine gute Warmformbeständigkeit des Schaumstoffkörpers erhalten bleibt.

Die Kunststoffpartikel 3 hingegen, die im Ausführungsbeispiel aus einem PP-Random-Copolymer bestehen, weisen eine gegenüber reinem PP verminderte Kristallinität und einen Schmelzpunkt KT3 von etwa 140°C auf, wie aus Fig. 2b ersichtlich.

Das Agglomerieren der Kunststoffpartikel 3 erfolgt nun bei einer Verarbeitungstemperatur TV von etwa 145°C, also oberhalb deren Schmelztemperatur KT3. sowie oberhalb der Schmelztemperatur KT1 der Kunststofffolie 4. Die zweite Schmelztemperatur KT2 der Kunststofffolie wird jedoch mit den gewünschten Auswirkungen auf deren mechanische Eigenschaften deutlich unterschritten.

Die gewählte Verarbeitungstemperatur TV erlaubt ferner ein Befüllen der Werkzeugkavität durch Naßdampf bei niedrigen Drücken, so dass das Werkzeug weniger massiv auszuführen ist als beim Einsatz höherer Temperaturen.

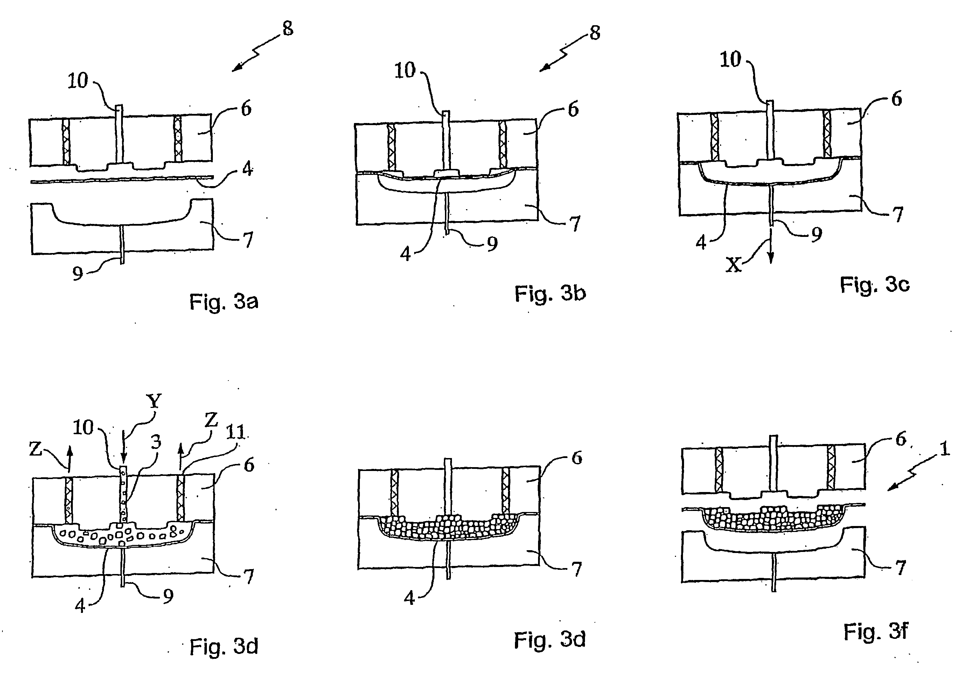

Bei der Herstellung des Schaumstoffkörpers 1 wird zunächst eine Kunststofffolie 4 aus dem genannten Werkstoffgemisch zwischen die Formhälten 6, 7 des Formwerkzeugs 8 eingelegt (Fig. 3a) und nach deren Schließen dichtend gehalten (Fig. 3b).

Über eine der späteren Sichtseite zugeordnet Unterdruckleitung 9 wird nachfolgend ein Vakuum (Pfeil X) an die untere Formhälfte 7 angelegt, wodurch sich die Kunststofffolie 4 an deren strukturierte Wandung anlegt (Fig. 3c).

Anschließend wird die Kavität, wie aus Fig. 3d ersichtlich, über eine die obere Formhälfte 6 durchdringende Beschickungsleitung 10 mit einem Gemisch aus Naßdampf und vorgeschäumten Kunststoffpartikeln 3 bei einer Temperatur unterhalb der zweiten Schmelztemperatur TS2 bzw. KT2 der Kunststofffolie befüllt (Pfeil Y). Die vormals in der Kavität vorhandene Luft sowie der überschüssige Naßdampf können dabei durch gaspermeable Bereiche 11 in der oberen Formhälfte 6 entweichen (Pfeil Z).

Nach dem Befüllen verschmelzen die in der Regel noch nachschäumenden Kunststoffpartikel 3 unter Ausbildung eines Formteils einerseits miteinander und andererseits mit der Kunststofffolie 4 (Fig. 3e).

Nach dem Öffnen der Formhälften 6, 7 (Fig. 3f) kann der Schaumstoffkörper 1 entnommen und einem Randbeschnitt zugeführt werden.

Wie in Fig. 1 b dargestellt, kann die Kunststofffolie (4) auch einen mehrlagigen Aufbau mit einer inneren Lage (12) und einer äußeren Lage (13) aufweisen, wobei jedoch zumindest die innere, dem Grundkörper zugewandte Lage (12) aus dem genannten Werkstoffgemisch aus PE, PP und TPO gefertigt ist.

### Bezugszeichen

- 1: Schaumstoffkörper
- 2: Grundkörper
- 3: Kunststoffpartikel
- 4: Kunststofffolie
- 5: Sichtseite
- 6, 7: Formhälften
- 8: Formwerkzeug
- 9: Unterdruckleitung
- 10: Beschickungsleitung
- 11: gaspermeabler Bereich
- 12,13: Lage (der Kunststofffolie)

## Patentansprüche

1. Schaumstofformkörper (1) mit einem Grundkörper(2) aus geschäumten, agglomerierten Kunststoffpartikeln (3), welcher zumindest bereichweise mit einer Kunststofffolie (4) umgeben ist, **dadurch gekennzeichnet, dass** die Kunststofffolie (4) aus einem Werkstoffgemisch mit mindestens einer ersten (TS1) und einer zweiten (TS2), gegenüber der ersten höheren Schmelztemperatur besteht, wobei die Kunststoffpartikel (3) bei einer Temperatur (TS3) oberhalb der ersten und unterhalb der zweiten Schmelztemperatur der Kunststofffolie miteinander agglomerierbar sind.

2. Schaumstoffkörper nach Anspruch 1, **dadurch gekennzeichnet, dass** die Kunststoffpartikel (3) und die Kunststofffolie (4) aus teilkristallinen Kunststoffen bestehen, deren Kristallitschmelztemperaturen (KT1), (KT2), KT3) den genannten Schmelztemperaturen (TS1, TS2, TS3) entsprechen.

3. Schaumstoffkörper nach Anspruch 1 oder 2, **dadurch gekennzeichnet, dass** das Werkstoffgemisch der Kunststofffolie (4) zumindest anteilig eine ähnliche stoffliche Zusammensetzung wie die Kunststoffpartikel (3) aufweist.

4. Schaumstoffkörper nach einem der Ansprüche 1 bis 3, **dadurch gekennzeichnet, dass** die Kunststoffpartikel (3) aus expandiertem Polypropylen (EPP) bestehen.

5. Schaumstoffkörper nach einem der vorhergehenden Ansprüche, **dadurch gekennzeichnet, dass** die Kunststofffolie (4) aus einem Gemisch aus Polyethylen (PE), Polypropylen (PP) und einem thermoplastischen Elastomer auf olefinischer Basis (TPO) besteht.

6. Schaumstoffkörper nach einem der vorhergehenden Ansprüche, **dadurch gekennzeichnet, dass** die Kunststofffolie (4) mehrlagig ausgebildet ist, wobei mindestens die dem Grundkörper (2) zugewandte Lage (12) aus dem genannten Werkstoffgemisch gefertigt ist.

7. Schaumstoffkörper nach Anspruch 6, **dadurch gekennzeichnet, dass** zumindest eine Lage (13) der Kunststofffolie (4) eingefärbt und/oder mit Mattierungsmitteln versehen ist.

8. Schaumstoffkörper nach einem der vorhergehenden Ansprüche, **dadurch gekennzeichnet, dass** die Dicke der Kunststofffolie (4) 100 bis 300 µm, vorzugsweise 150 bis 250 µm, insbesondere etwa 200 µm beträgt.

9. Schaumstoffkörper nach einem der vorhergehenden Ansprüche, **dadurch gekennzeichnet, dass** auf die Kunststofffolie (4) beim Verschmelzen mit den Kunststoffpartikeln (3) außenseitig eine Struktur aufprägbar ist.

10. Schaumstoffkörper nach einem der vorhergehenden Ansprüche, **dadurch gekennzeichnet, dass** der Schaumstoffkörper (1) flächig ausgebildet ist und sich die Kunststofffolie (4) im Wesentlichen über eine seiner Flächenseiten erstreckt.

11. Innenausstattungsteil für ein Kraftfahrzeug, insbesondere Sonnenblende oder eine Türverkleidung, umfassend einen Schaumstoffkörper (1) nach einem der vorhergehenden Ansprüche.

12. Verfahren zur Herstellung eines Schaumstoffkörpers (1) nach Anspruch 1, **dadurch gekennzeichnet, dass** die Kunststofffolie (4) in ein mehrteiliges Formwerkzeug (8) eingefegt und das Formwerkzeug anschließend mit den Kunststoffpartikeln (3) und erwärmtem Gas gefüllt wird, wobei die Temperatur des Gases höher als die erste (TS1), aber niedriger als die zweite Schmelztemperatur (TS2) des Werkstoffgemisches der Kunststofffolie ist.

13. Verfahren nach Anspruch 12, **dadurch gekennzeichnet, dass** als Gas Wasserdampf, insbesondere Naßdampf, Heißluft oder ein Gemisch derselben verwendet wird.

14. Verfahren nach Anspruch 12 oder 13, **dadurch gekennzeichnet, dass** die schäumbaren Kunststoffpartikel (3) unter Verwendung des erwärmten Gases pneumatischen in das Formwerkzeug (8) gefördert werden.

15. Verfahren nach einem der Ansprüche 12 bis 14, **dadurch gekennzeichnet, dass** die Kunststofffolie (4) nach Einlegen in das Formwerkzeug (8) randseitig zwischen dessen Formhälften (6), (7) gespannt wird.

16. Verfahren nach einem der Ansprüche 12 bis 15, **dadurch gekennzeichnet, dass** die Kunststofffolie (4) nach dem Einlegen in das Formwerkzeug (8) durch Anlegen eines Unterdrucks an eine Wandung der Kavität angelegt wird.

17. Verfahren nach einem der Ansprüche 12 bis 16, **dadurch gekennzeichnet, dass** die Kunststofffolie (4) nach dem Einlegen in das Formwerkzeug (8) und vor dessen Füllen mit den schäumbaren Kunststoffpartikeln (3) durch Einspeisen von erwärmtem Gas vorgedehnt wird.

18. Verfahren nach einem der Ansprüche 12 bis 17, **dadurch gekennzeichnet, dass** die Kunststofffolie (4) beim Einfüllen des Gemisches aus schäumbaren Kunststoffpartikeln (3) und erwärmtem Gas an eine strukturierte Wandung der Kavität gepreßt und **dadurch** außenseitig geprägt wird.

19. Verfahren nach einem der Ansprüche 12 bis 18, **dadurch gekennzeichnet, dass** das dem Formwerkzeug (8) zugeführte Gas zumindest teilweise über gaspermeable, nicht von der Kunststofffolie (4) abgedeckte Bereiche (11) der Kavität des Formwerkzeugs (8) abgeführt wird.

## Claims

1. Moulded foam article (1) having a base member (2) of foamed, agglomerated plastics particles (3), which base member (2) is at least in part enclosed with a plastics film (4), **characterized in that** the plastics film (4) consists of a mixture of materials having at least a first melting temperature (TS1) and a second melting temperature (TS2) which is higher than the first, it being possible to agglomerate the plastics particles (3) with one another at a temperature (TS3) which is above the first and below the second melting temperature of the plastics film.

2. Foam article according to Claim 1, **characterized in that** the plastics particles (3) and the plastics film (4) consist of partially crystalline plastics, the crystallite melting temperatures of which (KT1), (KT2), (KT3) correspond to the stated melting temperatures (TS1, TS2, TS3).

3. Foam article according to Claim 1 or 2, **characterized in that** the mixture of materials of the plastics film (4) at least in part exhibits a similar material composition to the plastics particles (3).

4. Foam article according to one of Claims 1 to 3, **characterized in that** the plastics particles (3) consist of expanded polypropylene (EPP).

5. Foam article according to one of the preceding claims, **characterized in that** the plastics film (4) consists of a mixture of polyethylene (PE), polypropylene (PP) and an olefin-based thermoplastic elastomer (TPO).

6. Foam article according to one of the preceding claims, **characterized in that** the plastics film (4) is of a multilayer structure, wherein at least the layer (12) facing the base member (2) is made from the stated mixture of materials.

7. Foam article according to Claim 6, **characterized in that** at least one layer (13) of the plastics film (4) is coloured and/or provided with matting agents.

8. Foam article according to one of the preceding claims, **characterized in that** the thickness of the plastics film (4) amounts to 100 to 300 *µ*m, preferably 150 to 250 *µ*m, in particular approx. 200 *µ*m.

9. Foam article according to one of the preceding claims, **characterized in that** a texture may be embossed onto the outside of the plastics film (4) on fusion with the plastics particles (3).

10. Foam article according to one of the preceding claims, **characterized in that** the foam article (1) is of planar structure and the plastics film (4) extends substantially over one of the planar sides thereof.

11. Interior trim part for a motor vehicle, in particular sun visor or door trim, comprising a foam article (1) according to one of the preceding claims.

12. Method for producing a foam article (1) according to Claim 1, **characterized in that** the plastics film (4) is laid in a multipart mould (8) and the mould is then filled with the plastics particles (3) and heated gas, the temperature of the gas being higher than the first melting temperature (TS1), but lower than the second melting temperature (TS2) of the mixture of materials of the plastics film.

13. Method according to Claim 12, **characterized in that** the gas used is steam, in particular wet steam, hot air or a mixture thereof.

14. Method according to Claim 12 or 13, **characterized in that** the foamable plastics particles (3) are pneumatically conveyed into the mould (8) using the heated gas.

15. Method according to one of Claims 12 to 14, **characterized in that**, after being laid in the mould (8), the plastics film (4) is clamped peripherally between the mould halves (6), (7) of the mould (8).

16. Method according to one of Claims 12 to 15, **characterized in that**, after being laid in the mould (8), the plastics film (4) is applied against a wall of the cavity by application of a reduced pressure.

17. Method according to one of Claims 12 to 16, **characterized in that**, after being laid in the mould (8) and before the latter is filled with the foamable plastics particles (3), the plastics film (4) is pre-extended by introduction of heated gas.

18. Method according to one of Claims 12 to 17, **characterized in that**, on introduction of the mixture of foamable plastics particles (3) and heated gas, the plastics film (4) is pressed against a textured wall of the cavity and so embossed on the outside.

19. Method according to one of Claims 12 to 18, **characterized in that** the gas supplied to the mould (8) is exhausted at least partly via gas-permeable zones (11) of the cavity of the mould (8) not covered by the plastics film (4).

## Revendications

1. Corps en mousse plastique (1) avec un corps de base (2) constitué de particules synthétiques (3) agglomérées ou expansées, qui est au moins partiellement entouré d'un film synthétique (4), **caractérisé en ce que** le film synthétique (4) est constitué d'un mélange de matériaux avec au moins une première (TS1) et une deuxième (TS2) températures de fusion, la deuxième étant supérieure à la première, les particules synthétiques (3) pouvant être agglomérées ensemble à une température (TS3) supérieure à la première et inférieure à la deuxième température de fusion du film synthétique.

2. Corps en mousse plastique selon la revendication 1, **caractérisé en ce que** les particules synthétiques (3) et le film synthétique (4) sont constitués de matières plastiques semi-cristallines, dont les températures de fusion du cristallite (KT1), (KT2), (KT3) correspondent aux températures de fusion citées (TS1, TS2, TS3).

3. Corps en mousse plastique selon la revendication 1 ou 2, **caractérisé en ce que** le mélange de matériaux du film synthétique (4) possède une composition matérielle au moins partiellement similaire à celle des particules synthétiques (3).

4. Corps en mousse plastique selon l'une des revendications 1 à 3, **caractérisé en ce que** les particules synthétiques (3) sont constituées de polypropylène (EPP) expansé.

5. Corps en mousse plastique selon l'une des revendications précédentes, **caractérisé en ce que** le film synthétique (4) est constitué d'un mélange de polyéthylène (PE), de polypropylène (PP) et d'un élastomère thermoplastique à base d'oléfine (TPO).

6. Corps en mousse plastique selon l'une des revendications précédentes, **caractérisé en ce que** le film synthétique (4) est conçu en plusieurs couches, parmi lesquelles au moins la couche (12) tournée vers le corps de base (2) est constituée dudit mélange de matériaux.

7. Corps en mousse plastique selon la revendication 6, **caractérisé en ce qu'**au moins une couche (13) du film synthétique (4) est teintée et/ou comporte des agents de matité.

8. Corps en mousse plastique selon l'une des revendications précédentes, **caractérisé en ce que** l'épaisseur du film synthétique (4) est de 100 à 300 µm, préférentiellement de 150 à 250 µm, notamment d'environ 200 µm.

9. Corps en mousse plastique selon l'une des revendications précédentes, **caractérisé en ce qu'**une structure peut être du côté extérieur sur le film synthétique (4) lors de la fusion avec les particules synthétiques (3).

10. Corps en mousse plastique selon l'une des revendications précédentes, **caractérisé en ce que** le corps en mousse plastique (1) est plat et **en ce que** le film synthétique (4) s'étend essentiellement sur sa surface.

11. Pièce d'équipement intérieur pour un véhicule automobile, notamment revêtement de porte ou pare-soleil, comprenant un corps en mousse plastique (1) selon l'une des revendications précédentes.

12. Procédé pour la fabrication d'un corps en mousse plastique (1) selon la revendication 1, **caractérisé en ce que** le film synthétique (4) est placé dans un moule de formage (8) à plusieurs pièces et **en ce que** le moule de formage est ensuite rempli avec les particules synthétiques (3) et du gaz chauffé, la température du gaz étant supérieure à la première température de fusion (TS1) du mélange de matériaux constituant le film synthétique, mais inférieure à la deuxième (TS2).

13. Procédé selon la revendication 12, **caractérisé en ce que** le gaz utilisé est une vapeur d'eau, notamment une vapeur humide, un air chaud ou bien un mélange de ceux-ci.

14. Procédé selon la revendication 12 ou 13, **caractérisé en ce que** les particules synthétiques (3) expansibles sont transportées de façon pneumatique dans le moule de formage (8) au moyen du gaz chauffé.

15. Procédé selon l'une des revendications 12 à 14, **caractérisé en ce qu'**après avoir été placé dans le moule de formage (8), le film synthétique (4) est serré entre les bords des moitiés de moule (6), (7).

16. Procédé selon l'une des revendications 12 à 15, **caractérisé en ce qu'**après avoir été placé dans le moule de formage (8), le film synthétique (4) est appliqué par dépression contre une paroi de la cavité.

17. Procédé selon l'une des revendications 12 à 16, **caractérisé en ce qu'**après avoir été placé dans le moule de formage (8) et avant le remplissage de ce dernier avec les particules synthétiques (3) expansibles, le film synthétique (4) est pré-tendu en introduisant le gaz chauffé.

18. Procédé selon l'une des revendications 12 à 17, **caractérisé en ce que** lors de l'introduction du mélange de particules synthétiques expansibles (3) et de gaz chauffé, le film synthétique (4) est pressé contre une paroi structurée de la cavité et par conséquent marqué du côté extérieur.

19. Procédé selon l'une des revendications 12 à 18, **caractérisé en ce que** le gaz conduit au moule de formage (8) est évacué au moins partiellement par des zones (11) de la cavité du moule de formage (8) qui ne sont pas recouvertes par le film synthétique (4) et qui sont perméables au gaz.
